# FASCICULE DE BREVET EUROPEEN

(11) **EP 3 055 681 B1**
(45) Date de publication et mention de la délivrance du brevet: **30.08.2017**
(21) Numéro de dépôt: 14790237.3
(22) Date de dépôt: 09.10.2014
(51) Int. Cl.: G01N 21/88, G01N 21/90, G01N 21/95

(54) **PROCEDE ET DISPOSITIF POUR INSPECTER LES SOUDURES D'EMBALLAGES**
VERFAHREN UND VORRICHTUNG ZUR INSPEKTION VON VERPACKUNGSNÄHTEN
METHOD AND DEVICE FOR INSPECTING PACKAGING SEAMS

(30) Priorité: 11.10.2013 FR 1359920
(43) Date de publication de la demande: 17.08.2016
(73) Titulaire: Bizerba Luceo, 35772 Vern-sur-Seiche Cedex (FR)
(72) Inventeur: PIROT, Eric, F-35510 Cesson-Sevigne (FR); ROUBERT, Laurent, F-35890 Bourg des Comptes (FR); RBAA, Ahmed, 35200 Rennes (FR)
(74) Mandataire: Putet, Gilles
(86) Numéro de dépôt international: PCT/FR2014/052566
(87) Numéro de publication internationale: WO 2015/052445

(56) Documents cités:
- WO-A1-2010/052431
- WO-A1-2013/007951
- FR-A1- 2 744 422
- FR-A1- 2 855 268
- FR-A1- 2 907 424
- US-A- 5 515 159
- US-B2- 7 142 707

## Description

La présente invention concerne le domaine technique de l'inspection d'emballages thermoscellés au sens général.

L'objet de l'invention trouve des applications particulièrement avantageuses mais non exclusivement, dans,le domaine du contrôle des emballages de produits relevant du domaine agro-alimentaire, de la pharmacie ou de la cosmétique. L'invention s'applique également à d'autres emballages tels que des pochettes où deux films sont soudés ensemble.

D'une manière générale, chaque emballage thermoscellé comporte au moins une alvéole de réception du produit à emballer. Chaque alvéole est fermée par un film qui est soudé sur l'alvéole. La zone de jonction entre le film et l'alvéole correspond à la soudure qui entoure l'alvéole en étant située généralement au bord de l'alvéole. Les soudures se présentent sous la forme d'un ruban délimité par deux bords opposés de part et d'autre d'une courbe directrice.

Après le conditionnement des produits, il apparaît le besoin d'assurer le contrôle de la qualité de soudage.

Dans l'art antérieur, le document EP 2 350 621 décrit des procédés permettant de détecter dans la zone de soudure, la présence d'intrus qui conduit à une altération d'une part, de la qualité de la soudure du point de vue de l'étanchéité et, d'autre part de l'aspect esthétique lié au produit et à l'emballage. Cette solution permet de détecter comme cause de non soudure, uniquement la présence des contaminants, et ne permet pas de détecter les défauts de soudure dus à des bulles, de régions non soudées ou des parties grasses ou humides incolores. Autrement dit, la technique proposée est insuffisante à garantir la qualité des soudures. Cette solution n'est donc pas satisfaisante car il apparaît, d'une part, que dans certaines conditions du processus de soudage, la qualité de la soudure n'assure pas une largeur de soudage suffisante, ce qui peut entrainer une mauvaise conservation du produit même sans présence d'intrus et, d'autre part, à l'inverse, la présence d'intrus de taille réduite ne remet pas en cause la conservation du produit si la largeur de soudure est suffisante malgré la présence de cet intrus. De manière complémentaire, cette technique n'est pas adaptée à déceler la présence de bulles au milieu de la soudure, ce qui pourtant fragilise la soudure.

La demande de brevet WO 2013/007951 décrit un procédé pour contrôler en particulier les structures d'emballages thermoscellés à l'aide d'un capteur linéaire d'images. Ce procédé vise à illuminer les emballages à l'aide d'un faisceau lumineux balayant les soudures selon une direction de balayage en s'étendant transversalement par rapport à la direction de balayage.

Le procédé vise à acquérir cycliquement pour chaque incrément de mouvement, une séquence de n images successives obtenues chacune avec des temps d'exposition différents et/ou des conditions d'éclairages différentes.

Ce procédé vise ensuite à regrouper entre elles les lignes d'images obtenues dans les séquences avec à la fois le même temps d'exposition et les mêmes conditions d'éclairage de manière à obtenir n images superposables obtenues avec des temps d'exposition différents et/ou dans des conditions d'éclairage différentes. Le procédé vise à analyser séparément ou en combinaison les images afin de déterminer au moins une caractéristique des emballages inspectés.

Cette demande de brevet décrit une technique d'inspection d'emballages, simple et peu onéreuse à mettre en oeuvre, tout en étant conçue pour permettre de contrôler entièrement une zone d'inspection présentant localement des caractéristiques non homogènes. Cependant, ce document ne donne pas d'information sur la méthode permettant d'analyser les images pour détecter si les emballages sont correctement ou non soudés. Par ailleurs, la technique d'inspection décrite par ce document ne donne pas la possibilité de détecter si les emballages sont correctement ou non soudés.

Le brevet US 5 515 159 décrit un système de vision pour inspecter des soudures d'emballage. Ce document prévoit d'éclairer l'emballage à l'aide d'un éclairage structuré permettant de détecter les soudures caractérisées par une empreinte créée par l'effet de frappe lors l'opération d'operculage. Ce document prévoit également de mettre en oeuvre un éclairage rétrodiffusé pour visualiser les défauts de soudure.

Ce système comporte également une caméra permettant d'obtenir une image de l'emballage. L'image est analysée de manière à déterminer la largeur transversale de la soudure afin de déterminer la conformité de la soudure par rapport à une valeur de références.

Ce brevet décrit une technique d'inspection limitée à des soudures comportant une empreinte due au coup de frappe lors de l'opération de thermoscellage. Par ailleurs, la technique d'inspection décrite par ce brevet ne permet pas d'obtenir une image des soudures avec suffisamment de précision pour déterminer si les emballages sont correctement ou non soudés.

La présente invention vise donc à remédier aux inconvénients de l'art antérieur en proposant une technique permettant de contrôler les soudures présentées pas des emballages thermoscellés, en détectant avec une grande précision, les parties soudées ou non soudées, afin de mettre en évidence toutes parties non soudées et de mesurer avec précision la largeur de la soudure, et ce tout le long de la courbe directrice des soudures de manière à déterminer si les emballages sont défectueux ou correctement soudés.

Un autre objet de l'invention vise à contrôler la qualité des soudures des emballages par un procédé optique fonctionnant à travers une partie transparente ou translucide et offrant l'avantage de contrôler à une vitesse adaptée au procédé de fabrication et sans contact direct avec l'emballage.

Pour atteindre cet objectif, l'invention vise un procédé pour inspecter des soudures d'emballages selon la revendication 1.

Le procédé selon l'invention comporte également en combinaison l'une et/ou l'autre des caractéristiques additionnelles suivantes :
- lors de l'étape de segmentation :
   - on présélectionne les pixels de valeurs de diffusion dans un intervalle déterminé comme appartenant potentiellement à la soudure ;
   - au voisinage de la courbe directrice, on choisit parmi les pixels présélectionnés, un ensemble de pixels connexes pour constituer ensemble la soudure ;
- mesurer la diffusion de la transition dans l'image brute matricielle en prenant en compte l'étalement de la transition qui est caractérisé, soit par la baisse de gradient de lumière au voisinage de la transition, soit par le déplacement d'un point de franchissement d'un seuil de lumière défini, soit en mesurant le niveau de gris des pixels considérés le long de lignes sélectionnées situées en dehors de la zone éclairée, mais au voisinage de la transition lumineuse ;
- projeter comme faisceau lumineux, une bande lumineuse produisant deux transitions lumineuses dans le champ de la caméra, et la mesure de diffusion est obtenue par l'analyse des deux transitions ;
- projeter comme faisceau lumineux, une raie lumineuse étroite dont la section transversale correspond à un pic de lumière ;
- la mesure de diffusion est obtenue par l'étalement du pic de lumière déterminé soit par la largeur entre les deux points de franchissement d'un seuil de lumière défini, soit par la baisse de hauteur du pic, soit par la mesure des niveaux gris des pixels considérés le long de lignes sélectionnées situées de part et d'autre de la zone éclairée, en dehors mais au voisinage de la transition lumineuse, soit par la baisse de gradient de lumière au voisinage de la transition ;
- analyser l'image uniquement pour une zone d'inspection de surface largement inférieure à l'image mais englobant au moins la soudure considérée comme correcte, ladite zone d'inspection étant une région géométriquement définie au préalable, et positionnée dans l'image, soit en fonction de la connaissance à priori de la position des emballages lors du contrôle, soit en fonction des résultats d'une étape de localisation de la soudure par analyse de l'image ;
- analyser l'image dès qu'est obtenue par balayage, une image contenant au moins les deux bords opposés de la soudure pour au moins une portion de la courbe directrice ;
- choisir l'angle d'incidence de projection du faisceau lumineux et d'observation de la caméra défini comme l'angle entre son axe optique et la normale à la surface de l'emballage, de manière à ne pas acquérir la lumière réfléchie de manière spéculaire par l'emballage;
- choisir l'angle d'incidence de projection du faisceau lumineux et d'observation de la caméra défini comme l'angle entre son axe optique et la normale à la surface de l'emballage, de manière à limiter ou supprimer l'occultation de la soudure par les bords des alvéoles des emballages.

Un autre objet de l'invention est de proposer un dispositif pour inspecter des soudures d'emballages selon la revendication 11.

Le dispositif selon l'invention comporte également en combinaison l'une et/ou l'autre des caractéristiques additionnelles suivantes :
- le faisceau lumineux produit sur l'emballage une bande lumineuse présentant dans le champ de la caméra, deux transitions lumineuses s'étendant sur toute la largeur de champ ;
- le faisceau lumineux produit sur l'emballage une raie lumineuse étroite s'étendant sur toute la largeur de champ et présentant dans la direction, un pic compris entre deux transitions lumineuses proches ;
- le système de balayage des soudures par le faisceau lumineux et le champ rectangulaire de la caméra sont des moyens de déplacement des emballages en translation dans le champ de la caméra ou avançant par saccades ;
- le système de balayage des soudures par le faisceau lumineux et le champ rectangulaire de la caméra sont des moyens de déplacement des dispositifs optiques par rapport aux emballages fixes ou avançant par saccades ;
- le système de balayage des soudures par le faisceau lumineux et le champ rectangulaire de la caméra comprennent des dispositifs optiques de déflexion des rayons lumineux issus de la source et des rayons lumineux captés par la caméra, lesdits dispositifs optiques étant interposés entre les emballages d'une part et la source de lumière et la caméra d'autre part ;
- le système de balayage délivre à l'unité de traitement des informations de positionnement des emballages par rapport au champ de la caméra ;
- l'angle d'incidence de projection du faisceau lumineux et d'observation de la caméra défini comme l'angle entre son axe optique et la normale à la surface de l'emballage, sont choisis de manière à ne pas acquérir la lumière réfléchie ou transmise de manière spéculaire par l'emballage ;
- la source lumineuse et la caméra étant situées du même côté de l'emballage, l'angle d'incidence de projection du faisceau lumineux et d'observation de la caméra défini comme l'angle entre son axe optique et la normale à la surface de l'emballage, sont choisis- entre 10° et 30° et de préférence entre 20° et 25° ;
- l'angle d'incidence de projection du faisceau lumineux est choisi entre 5° et 30° et de préférence entre 15° et 20° tandis que l'angle d'incidence d'observation de la caméra défini comme l'angle entre son axe optique et la normale à la surface de l'emballage est compris entre 0 et 5° est de préférence égal à 0, la source et la caméra étant situées de manière opposée par rapport à l'emballage.

L'invention consiste donc à contrôler la zone assemblée constituée des deux films soudés (alvéole et film supérieur) par analyse des propriétés de diffusion de la lumière dans la zone soudée, c'est-à-dire par analyse de la lumière réfléchie ou transmise de manière non spéculaire par l'emballage.

L'objet de l'invention est de déterminer la zone réelle de soudure et de mesurer la largeur de la soudure. Pour cela, l'invention s'appuie sur la modification des propriétés optiques de diffusion des matériaux servant à la fabrication des emballages qui sont modifiées après soudage (échauffement de la matière et soudure des deux films superposés). Cette modification de propriété va être utilisée par l'invention pour déterminer les zones réellement soudées.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue d'un exemple de réalisation d'un dispositif d'inspection des soudures d'emballages conforme à l'invention, selon un montage en réflexion.
La **Figure 2** est une vue de dessous d'un emballage à inspecter.
La **Figure 3** donne un exemple d'une image brute matricielle **B(N)** d'une partie d'un emballage comportant une soudure.
La **Figure 3A** montre des courbes de niveaux de gris s'étendant selon la direction de balayage, en deux points caractéristiques de la direction de contrôle.
La **Figure 4A** est une vue d'un faisceau lumineux réalisé sous la forme d'une bande lumineuse produisant une transition lumineuse pour illuminer un emballage.
La **Figure 4B** montre le niveau de gris selon la direction de balayage pour une transition lumineuse avec diffusion et de peu de diffusion.
La **Figure 5A** est une vue d'un faisceau lumineux réalisé sous la forme d'une bande lumineuse produisant deux transitions lumineuses pour illuminer un emballage.
Les **Figures 5B**, **5C, 5D** sont des schémas illustrant le niveau de gris selon la direction de balayage pour des transitions lumineuses avec diffusion et peu de Diffusion, permettant la mesure de la diffusion selon trois méthodes différentes.
La **Figure 6** est un exemple d'une ligne d'image **I**(**N**) obtenue à partir des valeurs de diffusion extraites d'une image brute matricielle **B(N)** illustrée à la **Fig**. **3****.**
Les **Figures 7A, 7B** sont des exemples d'images matricielles **I** contenant une partie de l'emballage dans laquelle une portion de la soudure apparaît.
La **Figure 8** est un schéma illustrant la notion de largeur transversale de la soudure.
La **Figure 9** illustre une autre variante de montage en réflexion du dispositif selon l'invention dans lequel la caméra et la source lumineuse sont disposées du même côté de l'emballage.
La **Figure 10** illustre une autre variante de montage en transmission du dispositif selon l'invention dans lequel la caméra et la source lumineuse sont disposées de part et d'autre de l'emballage.
**La** **Figure 11** illustre un schéma optique de principe pour l'inspection d'emballage à alvéole profonde.
**La** **Figure 12** illustre un exemple de réalisation du montage optique de la **Fig. 11**.

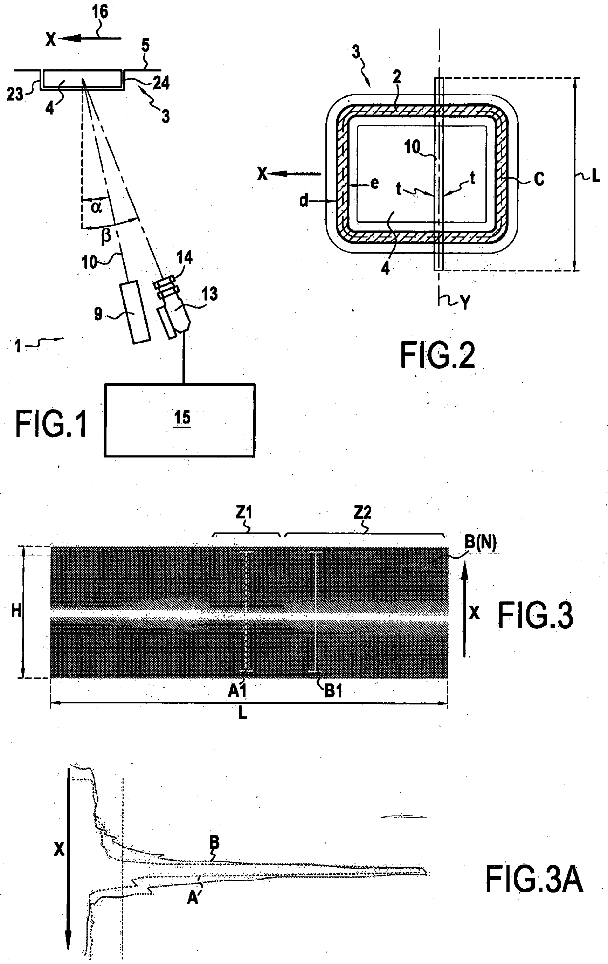

Tel que cela ressort plus précisément des **Fig. 1** et **2**, l'objet de l'invention concerne un dispositif **1** pour inspecter les soudures **2** d'emballages thermoscellés **3** afin de déterminer la conformité ou non des soudures. Selon l'application préférée illustrée sur les dessins, les emballages thermoscellés **3** comportent chacun une alvéole de réception **4** d'un produit et chaque alvéole **4** est fermée par un film **5** qui est fixé sur l'alvéole par une soudure **2.** Selon une application préférée, l'emballage **3** est adapté au conditionnement de produits relevant du domaine agroalimentaire mais il est clair que le dispositif d'inspection selon l'invention peut s'appliquer à des emballages relevant de domaines techniques différents.

Dans l'exemple illustré à la **Fig. 2****,** la soudure **2** présente une forme géométrique sensiblement rectangulaire mais il est clair que l'invention s'applique pour inspecter des soudures présentant des géométries différentes. D'une manière générale, une soudure **2** est considérée comme un ruban ou une bande délimité par deux bords opposés **d, e** situés de part et d'autre d'une courbe directrice **C** suivant laquelle la soudure s'étend.

Le dispositif d'inspection **1** comporte également au moins une source **lumineuse 9** illuminant les emballages **3** par un faisceau lumineux **10** s'étendant selon une direction de contrôle **Y** de manière à couvrir une largeur de champ **L** dans lequel sont situées les soudures **2** à inspecter. Conformément à l'invention, le faisceau idmineùx **10** produit sur l'emballage **3** selon une direction de balayage **X**, au moins une et dans l'exemple illustré à la **Fig**. **2****,** deux transitions lumineuses **t** s'étendant sur la largeur de champ **L.** Selon cet exemple de réalisation, le faisceau lumineux **10** fournit une bande lumineuse produisant deux transitions lumineuses **t** s'étendant sur la largeur de champ **L.**

Selon une variante avantageuse de réalisation, le faisceau lumineux **10** produit une raie lumineuse étroite s'étendant sur toute la largeur de champ **L** et présentant dans la direction de balayage **X,** un pic compris entre deux transitions lumineuses proches. Par une transition lumineuse **t,** il doit être compris un changement rapide de niveau de lumière, plus précisément de l'éclairement produit dans la direction **X**. Autrement dit, la fonction éclairement selon la direction **X** tend vers une fonction de type échelon. Par exemple, la source lumineuse **9** est un laser anamorphosé, ou un éclairage focalisé à base de technologie LED.

Le dispositif d'inspection **1** comporte également une caméra **13** munie d'un objectif **14** présentant un champ rectangulaire de dimensions **LxH**, avec **L** correspondant à la largueur de contrôle de l'emballage selon la direction **Y** et une dimension **H** s'étendant selon une direction perpendiculaire à la direction de contrôle **Y.** Les images acquises par la caméra sont transmises à une unité de traitement d'images **15** qui sera décrite en détail dans la suite de la description.

Le dispositif d'inspection **1** comporte également un système **16** permettant de balayer, selon la direction de balayage **X**, les soudures **2** par le faisceau lumineux **10** et le champ rectangulaire de la caméra **13.** Il doit être compris qu'un tel système de balayage **16** permet d'illuminer les soudures **2** (par le faisceau **10**) et de prendre des images (par la caméra **13)** des soudures **2** illuminées, et ce pour la totalité des soudures des emballages. Il est à noter que dans l'exemple illustré à la **Fig. 2****,** la direction de balayage **X** est perpendiculaire à la direction de contrôle **Y** puisque le repère **X**, **Y**, **Z** est orthonormé. Cependant, la direction de balayage **X** est d'une manière générale transversale à la direction de contrôle **Y,** pour permettre de couvrir la totalité de la soudure par le faisceau **10** et le champ de la caméra.

Selon un exemple de réalisation, le système de balayage **16** des soudures **2** par le faisceau lumineux **10** et le champ rectangulaire **LxH** de la caméra **13** est un moyen de déplacement en translation continu ou par saccades, des emballages dans le champ de la caméra **13.** En d'autres termes, la caméra **13** est fixe et peut être placée en sortie de la ligne de fabrication des emballages qui sont déplacés classiquement en translation par un convoyeur. Par exemple, les alvéoles sont reliés entre elles et aucun découpage de la bande de film et d'alvéoles n'a encore été fait avant le contrôle. Les emballages sont ainsi amenés à défiler devant un poste de contrôle, soit en continu sur une ligne de convoyage, soit par saccade correspondant au fonctionnement de la thermoformeuse.

Selon un autre exemple de réalisation, le système **16** de balayage des soudures **2** par le faisceau lumineux **10** et le champ rectangulaire **LxH** de la caméra **13** comporte des moyens de déplacement de dispositifs optiques par rapport aux emballages fixes ou avançant par saccades.

Selon encore un autre exemple de réalisation, le système **16** de balayage des soudures **2** par le faisceau lumineux **10** et le champ rectangulaire **LxH** de la caméra **13** comprend des dispositifs optiques de déflexion des rayons lumineux issus de la source lumineuse **9** et des rayons lumineux captés par la caméra **13,** lesdits dispositifs optiques étant interposés entre les emballages d'une part et la source lumineuse **9** et la caméra **13** d'autre part.

Selon encore un autre exemple de réalisation, le système **16** de balayage délivre à l'unité de traitement **15,** des informations de positionnement des emballages **3** par rapport au champ de la caméra.

Il est à noter qu'il est considéré que le système de balayage **16** effectue N incréments de balayage pour inspecter la totalité des soudures **2** d'un emballage **3.**

Ainsi, la caméra **13** délivre des images brutes matricielles **B(N)** pour chaque incrément de balayage **N.** Bien entendu, chaque image brute matricielle **B(N)** englobe la ou les transitions lumineuses **t.** La **Fig. 3** donne un exemple d'une image brute matricielle **B(N)** d'une partie d'un emballage comportant une soudure **2.** Cette image brute matricielle **B(N)** contient les deux transitions lumineuses **t fournies** par une raie lumineuse et présente un champ rectangulaire de dimensions **LxH,** avec **L** correspondant à la largeur de contrôle de l'emballage selon la direction **Y** et une dimension **H** s'étendant selon la direction de balayage **X** qui est transversal à la direction de contrôle **Y.**

Les images brutes matricielles **B(N)** délivrées successivement par la caméra **13** au cours des **N** incréments sont acquises et traitées par l'unité **15** de traitement. L'unité de traitement **15** comporte des moyens pour la mise en oeuvre du procédé conforme à l'invention qui sera décrit plus précisément dans la suite de la description. Cette unité de traitement **15** comporte également des moyens de mémorisation des données comme cela apparaîtra dans la suite de la description.

Conformément à l'invention, le procédé consiste pour chaque image **B(N)** acquise, à extraire sur toute la largeur de champ **L,** une mesure de la diffusion par l'emballage de la transition lumineuse **t,** ou comme dans l'exemple illustré, des deux transitions lumineuses **t.** Ces mesures de la diffusion par l'emballage des transitions lumineuses **t** sont enregistrées.

Le procédé selon l'invention exploite ainsi les différences de propriété de diffusion de la lumière dans l'emballage, propre aux zones soudées ou soudures **2** d'une part et aux zones non soudées d'autre part. Pour un type de matériau d'un emballage, le matériau d'une partie non soudée diffuse peu de lumière et celle-ci ne se propage pas dans l'épaisseur du matériau au niveau de l'interface du film et de l'alvéole. Pour ce type de matériau, le matériau d'une partie soudée est à l'inverse plus diffusant et en particulier la lumière se propage puis diffuse au coeur de de cette partie soudée.

Sur la **Fig. 3****,** il apparait une zone **Z**₁ de faible diffusion de la lumière correspondant à une partie de l'emballage non soudée ainsi qu'une zone **Z**₂ de plus forte diffusion de la lumière correspondant à une partie soudée de l'emballage. La **Fig. 3A** donne un exemple de courbe donnant à partir de l'image brute matricielle illustrée à la **Fig**. **3**, des courbes de niveau de gris s'étendant selon la direction de balayage **X**. La courbe de niveau de gris **A** des pixels de la caméra, prise en un point **A**₁ selon la largeur de champ **L est** située dans la zone **Z**₁ tandis que la courbe du niveau de gris **B** pris en un point **B₁** différent du point **A₁** est située dans la zone **Z₂.**

Il peut donc être considéré que les zones de diffusion de la lumière (à savoir la zone **Z₂** dans l'exemple illustré à la **Fig.** 3) sont les zones soudées de sorte qu'en analysant ces zones, les zones soudées peuvent être mesurées. Cependant, il a été observé pour un autre type de matériau d'un emballage, des propriétés de diffusion inverses c'est-à-dire que le matériau d'une partie soudée est peu diffusant.

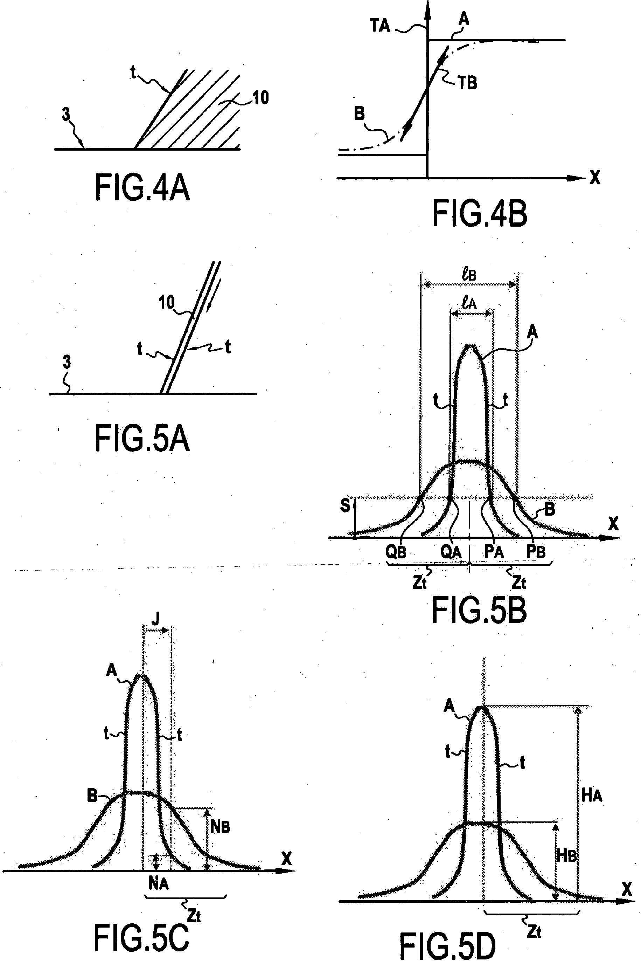

La mesure de la diffusion par l'emballage de la ou des transition(s) lumineuse(s) **t** dans l'image brute matricielle **B(N)** est l'étalement de la ou des transition(s) lumineuse(s) **t.** Cet étalement peut être caractérisé de différentes manières, comme par exemple par la baisse de gradient de lumière au voisinage de la transition (**Fig. 4A, 4B**), par le déplacement d'un point **(PA** vers **PB**) de franchissement d'un seuil de lumière défini (**Fig**. **5A, 5B****),** soit en mesurant le niveau de gris des pixels considérés le long de lignes sélectionnées situées en dehors de la zone éclairée, mais au voisinage de la transition lumineuse (**Fig**. **5C****),** soit en mesurant le niveau de gris au niveau du pic des valeurs de gris **(****Fig. 5D****).**

Dans l'exemple illustré aux **Fig. 4A, 4B****,** le faisceau lumineux **10** est une bande lumineuses produisant une transition lumineuse **t** dans le champ **LxH** de la caméra. La mesure de diffusion est obtenue par l'analyse de cette transition lumineuse **t de** cette bande lumineuse. La **Fig. 4B** montre le niveau de gris des pixels de la caméra selon la direction de balayage **X,** pour la transition lumineuse **t** présentant peu de diffusion (courbe **A**) et présentant de la diffusion (courbe **B**). La courbe **A** avec peu de diffusion présente, au niveau de la transition, une pente **TA** tandis que la courbe **B** présentant de la diffusion possède une pente **TB** de valeur inférieure à la pente **TA.** La mesure de diffusion peut ainsi être caractérisée par le gradient de lumière au voisinage de la transition c'est-à-dire par la pente des niveaux de gris. Plus la pente est faible, plus la diffusion est importante.

Dans un exemple préféré illustré aux **Fig**. **5A, 5B, 5C, 5D** le faisceau lumineux **10** est une raie lumineuse étroite produisant deux transitions lumineuses t dans le champ **LxH** de la caméra **(****Fig. 5A****).** Par raie lumineuse étroite, on entend une raie lumineuse dont la largeur est telle qu'apparaît une atténuation du pic de niveau de gris lorsque la lumière est diffusée à l'intérieur du matériau. La mesure de diffusion est obtenue par l'analyse de cette raie lumineuse ou d'au moins une transition **t.**

La **Fig. 5B** montre le niveau de gris selon la direction de balayage **X,** pour des transitions lumineuses **t** présentant peu de diffusion (courbe **A**) et présentant de la diffusion (courbe **B).** Pour une valeur de seuil de lumière **S,** la courbe avec peu de diffusion **A** présente à l'endroit du franchissement du seuil **S**, deux points de transition **PA** et **QA** distants entre eux d'une largeur **IA** alors que la courbe avec diffusion **B** présente à l'endroit du franchissement du seuil **S,** deux points de transition **PB** et **QB** distants entre eux d'une largeur **IB** qui est supérieure à la largeur **IA**. Dans cette variante, la largeur **IA** ou **IB** mesure la diffusion. Plus cette largeur est grande alors plus la diffusion est importante. Il est à noter que dans l'exemple illustré, la largeur est prise sur les zones lumineuses **Zt** des deux transitions lumineuses **t**. Bien entendu, il pourrait être pris aussi la largeur sur une seule transition lumineuse correspondant à la demi largeur **IA** et **IB** c'est-à-dire à là distance entre d'une part une référence comme par exemple le milieu de la raie lumineuse et d'autre part, les points de transition **PB, PA** ou **QA, QB.**

Dans l'exemple illustré à la **Fig. 5C****,** la mesure de diffusion est obtenue en mesurant le niveau de gris selon une ligne sélectionnée **J** prise en un lieu donné de la direction de balayage **X.** Pour cette ligne **J,** le niveau de gris **NA** pour une courbe **A** présentant peu de diffusion est inférieur au niveau de gris **NB** d'une courbe **B** présentant un caractère important de diffusion. Il est à noter qu'il est possible de positionner la ligne **J** telle que le niveau **NA** est nul c'est-à-dire le long de lignes sélectionnées situées en dehors de la zone éclairée, mais au voisinage de la transition lumineuse. Dans cette variante de réalisation illustrée à la **Fig. 5C****,** les niveaux de gris **NA, NB** caractérisent la diffusion de la transition t. Il est possible d'effectuer la même analyse selon une ligne symétrique à **J** par rapport au pic, et prendre en compte une combinaison des niveaux sur les deux lignes encadrant la raie de lumière. Dans cette variante, le niveau de gris **NA, NB** mesure la diffusion. Plus le niveau de gris est grand alors plus la diffusion est importante.

Dans l'exemple illustré à la **Fig. 5D****,** la mesure de diffusion est obtenue en mesurant le niveau de gris au niveau du pic des valeurs de gris. Le niveau de gris du pic **HA** d'une courbe **A** présentant peu de diffusion est supérieur au niveau de gris **HB** du pic d'une courbe **B** présentant un caractère important de diffusion. Le niveau de gris du pic peut-être avantageusement pris comme la valeur maximale de niveau de gris considérée lors d'une recherche dans la direction de balayage **X.** La baisse de la hauteur du pic du niveau caractérise la diffusion. Plus la hauteur du pic est faible, plus la diffusion est importante. Le rapport des hauteurs des pics ou la différence des hauteurs des pics est une caractéristique aussi de la diffusion.

Tel que décrit ci-dessus, le procédé selon l'invention consiste donc à extraire et à mémoriser, pour chaque image brute matricielle **B(N);** et sur toute la largeur du champ **L,** les mesures de la diffusion, par l'emballage, de la ou des transitions lumineuses obtenues selon l'une ou l'autre des méthodes décrites ci-dessus. Ainsi par exemple, il est possible d'obtenir selon la direction de contrôle **Y,** une fonction de diffusion qui selon les principes décrits ci-dessus, peut s'exprimer de la manière suivante : **I(y), N(y), HA-HB(y)** ou **P(y).**

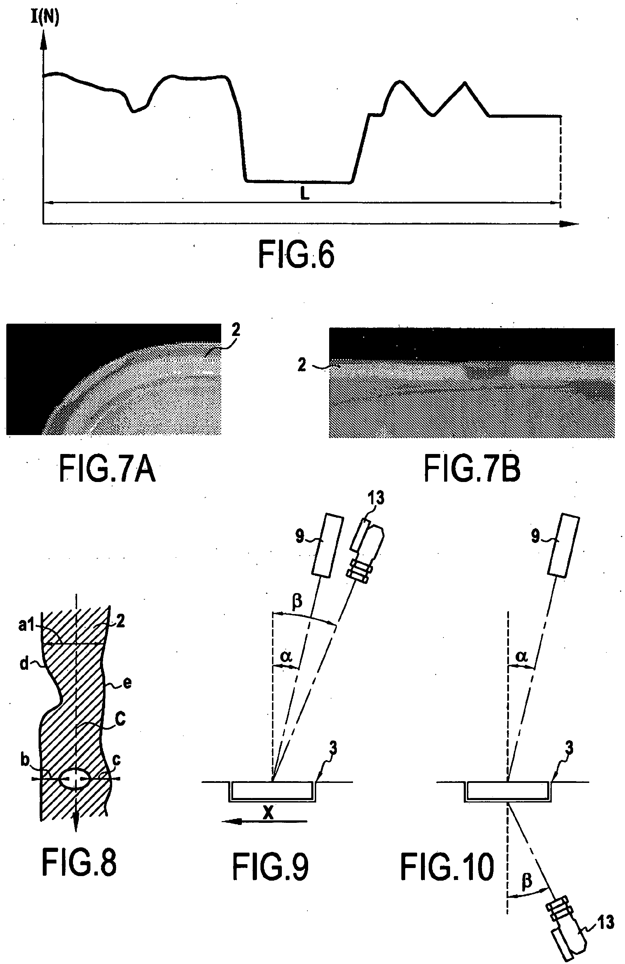

Le procédé selon l'invention consiste ensuite, pour chacun des **N** incréments successifs de balayage, à créer à partir de l'image brute matricielle **B(N),** une ligne d'image **I(N)** de largeur **L** dont chaque pixel reçoit comme valeur, la mesure dans l'image brute matricielle **B(N)** de la diffusion de la ou des transitions lumineuses. La **Fig. 6** est un exemple d'une ligne d'image **I(N)** obtenue à partir des valeurs de diffusion extraites de l'image brute matricielle **B(N)** montrée à la **Fig. 3****.**

Le procédé selon l'invention consiste ensuite, à enregistrer à la suite les unes des autres, au moins **N** lignes d'images **I(N)** afin de d'obtenir par juxtaposition, une image matricielle **I** contenant au moins les deux bords opposés **d, e** de la soudure pour au moins une portion de la courbe directrice **C:** Les **Fig. 7A** et **7B** sont des exemples d'images matricielles **I** contenant une partie de l'emballage dans laquelle une portion de la soudure **2** apparaît. Il est à noter que dans l'exemple illustré à la **Fig. 7A****,** la soudure **2** apparaît sombre alors que dans l'exemple illustré à la **Fig. 7B****,** la soudure apparaît claire.

Le procédé selon l'invention consiste ensuite à analyser l'image matricielle **I** afin de déterminer si la soudure est correcte ou non. A cet effet, l'image matricielle **I** est analysée en :
∘ identifiant les pixels appartenant à la soudure **2** grâce à leur valeur ;
∘ déterminant, en tout point le long de la portion de la courbe directrice C, comme première caractéristique de la soudure, au moins la largeur transversale a ;
∘ en déterminant la conformité de la soudure 2 sur ladite portion lorsque sa largeur transversale a reste en tout point, supérieure à un minimum donné.

Le minimum d'épaisseur correspond à la valeur limite au-dessous de laquelle il est considéré que la largeur de la soudure n'est pas suffisante pour assurer un conditionnement correct. Ainsi, si l'épaisseur de la soudure **2** est en tout point supérieure à cette valeur minimum alors la soudure **2** de l'emballage est considérée comme correcte. Inversement, si l'épaisseur de la soudure **2** est inférieure à cette valeur minimum alors la soudure **2** de l'emballage est considérée comme défectueuse.

La **Fig. 8** illustre la notion de largeur transversale de la soudure **2.** Par largeur transversale **a** de la soudure **2,** on entend selon une première variante, la largeur **a₁** du ruban, de soudure mesurée perpendiculairement à la ligne directrice **C** en tout point le long du ruban.

Parmi les causes de non soudés, se trouve la présence de bulles, qui ne sont pas nécessairement sur le bord de la soudure mais peuvent se trouver au milieu. Pour prendre en compte ce type de défauts, la largeur transversale **a** de la soudure selon une autre variante est la largeur transversale cumulée **a = b + c**. Cette largeur se généralise facilement en prenant en compte un nombre de pixels appartenant à la soudure et considérés dans une zone d'inspection placée sur la soudure.

Ces mesures en pixels sont obtenues par toute méthode empruntée aux techniques de traitement d'images comme des comptages de pixels connexes ou non connexes suivant des segments orthogonaux à la courbe directrice **C,** ou bien par détection de contours et mesures de distances entre les contours.

Typiquement, le traitement de l'image matricielle **I** en vue d'identifier les pixels appartenant à la soudure **2** grâce à leur valeur, est réalisé lors d'une étape de segmentation de l'image consistant à :
- présélectionner les pixels de valeurs de diffusion dans un intervalle, déterminé comme appartenant potentiellement à la soudure **2** ;
- à choisir au voisinage de la courbe directrice **C;** parmi les pixels présélectionnés, un ensemble de pixels connexes pour constituer ensemble la soudure.

Selon une variante avantageuse de réalisation, l'analyse de l' image **I** commence dès que l'on a obtenu par balayage une image **I** contenant au moins les deux bords opposés **d, e** de la soudure pour au moins une portion de la courbe directrice **C.**

Selon une autre variante avantageuse de réalisation, l'analyse de l'image **I,** est réalisée uniquement pour une zone d'inspection de surface largement inférieure à l'image **I** mais englobant au moins la soudure **2** considérée comme correct. Cette zone d'inspection est une région géométriquement définie au préalable et positionnée dans l'image **I,** soit en fonction de la connaissance à priori de la position des emballages lors du contrôle, soit en fonction des résultats d'une étape de localisation de la soudure par analyse de l'image **I.**

Il découle de la description qui précède que l'objet de l'invention vise à contrôler la qualité des soudures par l'analyse des propriétés dé diffusion de la lumière réfléchie ou transmise par l'emballage. Ainsi, l'angle d'incidence α de projection du faisceau lumineux **10** et d'observation β de la caméra défini comme l'angle entre son axe optique et la normale à la surface de l'emballage, sont choisis de manière à ne pas acquérir la lumière réfléchie ou transmise de manière spéculaire par l'emballage.

De même, l'angle d'incidence α de projection du faisceau lumineux et d'observation β de la caméra défini comme l'angle entre son axe optique et la normale à la surface de l'emballage, sont choisis de manière à limiter et voire supprimer l'occultation de la soudure par les bords des alvéoles des emballages.

Les **Fig**. **1** et **9** illustrent deux variantes de montage en réflexion du dispositif selon l'invention dans lesquelles la caméra **13** et la source lumineuse **9** sont disposées du même côté de l'emballage **3.** Dans l'exemple illustré à la **Fig**. **1**, la caméra **13** et la source lumineuse **9** sont disposés du côté de l'alvéole **4** de l'emballage **3.** Ce montage est particulièrement adapté pour un emballage d'épaisseur réduite présentant un film opaque pouvant être imprimé au niveau de la soudure. Dans l'exemple illustré à la **Fig**. **9**, la caméra **13** et la source lumineuse **9** sont disposées du côté opposé à l'alvéole **4** de l'emballage **3.** Ce montage est particulièrement adapté pour un emballage d'épaisseur quelconque présentant un film translucide imprimé uniformément au niveau de la soudure.

Pour ces montages en réflexion, la source lumineuse **9** est positionnée de sorte que l'angle d'incidence a de projection du faisceau lumineux **10** pris par rapport à la normale au plan du film de remballage est compris entre 10° et 30° et de préférence entre 20° et 25° alors que l'angle d'observation **β** de la caméra **13** défini comme l'angle entre son axe optique et la normale à la surface de l'emballage est compris entre 10° et 30° et de préférence entre 20° et 25°. Ces angles ont été choisis ainsi pour les raisons suivantes :
∘ ils ont le même signe (dit autrement la caméra et la source sont du même côté de la normale à l'alvéole) de façon que la caméra soit éloignée de l'axe de réflexion spéculaire du laser. Sinon, des reflets apparaissent ;
∘ ils sont supérieurs de préférence à 20° de façon à rester loin du domaine spéculaire même si le bord de l'emballage est légèrement incliné ou déformé. Dans l'hypothèse où le film n'est jamais déformé (c'est en théorie le cas à l'intérieur de la thermoformeuse), on pourrait réduire avantageusement ces deux angles à des valeurs strictement positives (respectivement strictement négatives).

La **Fig. 10** illustre une autre variante de montage en transmission du dispositif selon l'invention dans lequel la caméra **13** et la source lumineuse **9** sont disposées de part et d'autre de l'emballage **3,** avec la caméra **13** située du côté de l'alvéole **4.** Pour les montages en transmission, la source lumineuse **9** est positionnée de sorte que l'angle d'incidence α de projection du faisceau lumineux **10** pris par rapport à la normale au plan du film de l'emballage est compris entre 5° et 30° et de préférence entre 15° et 20° alors que l'angle d'observation **β** de la caméra **13** défini comme l'angle entre son axe optique et la normale à la surface de l'emballage est compris entre 0° et 5° et de préférence égal à 0. Ces angles ont été choisis ainsi pour les raisons suivantes ;
∘ l'angle caméra est de préférence nul pour pouvoir observer l'avant et l'arrière de l'emballage avec la même incidence. Un angle non nul entraînerait que la soudure située à l'avant de l'emballage (respectivement à l'arrière) serait occultée par le bord avant (respectivement arrière) du bas de l'emballage;
∘ l'angle de la source lumineuses est un compromis entre :
   - si l'angle est plus faible (entre 0° et 15° par exemple), le faisceau lumineux est émis directement vers la caméra et l'éblouit ;
   - si l'angle est plus grand (>20°par exemple), le laser éclaire le flanc vertical de l'arrière de l'emballage ce qui provoque des « reflets ou points chauds » dans la soudure.

Il ressort de la description qui précède, qu'avantageusement, le faisceau lumineux **10** possède une composition spectrale apte à traverser le matériau de l'emballage. De même, le faisceau lumineux **10** possède une composition spectrale apte à être fortement absorbée par au moins un type spécifique d'intrus.

Les **Fig**, **11** et **12** illustrent une variante de réalisation de l'invention permettant d'inspecter les soudures réalisées plus particulièrement sur des emballages **3** dont la géométrie relative hauteur barquette/position soudure ne rend pas possible l'observation de cette soudure sous l'angle d'observation **β** de la caméra **13.** En effet, pour de tels emballages, une zone masquée pour la caméra apparaît pour la partie de l'emballage située en bas à l'avant de la face **23** (**Fig**. **1**) alors que la partie de l'emballage située en bas à l'arrière de la face **24** (**Fig. 1****)** est visible.

Selon cette variante de réalisation, le dispositif selon l'invention comporte un système optique **18** interposé entre les emballages **3** et la caméra **13** et deux sources lumineuses **9, 9₁**. Le système optique **18** est conçu de manière que d'une part les angles d'incidence de projection des faisceaux lumineux issus des deux sources lumineuses **9**, **9₁** et d'autre part les angles d'observation de la caméra soient symétriques par rapport à la normale à l'emballage. La mise en oeuvre d'un tel montage optique permet d'observer l'embailage **3** selon deux axes d'observation symétriques permettant d'éliminer les zones masquées.

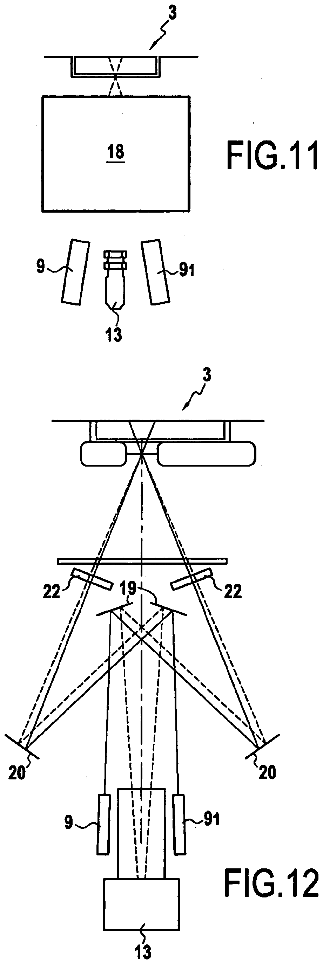

Bien entendu, de nombreuses formes de réalisation peuvent être envisagées pour réaliser un tel montage optique. La **Fig. 12** illustre un exemple de réalisation d'un exemple de montage selon lequel les sources lumineuses **9**, **9₁** telles que des diodes laser sont situées de part et d'autre de la caméra **13.** Dans l'exemple illustré à la **Fig. 12****,** le système optique **18** comporte un premier jeu de miroirs symétriques **19** placés en regard des sources lumineuses **9, 9₁** et de la caméra **13** et positionnés pour le renvoi des faisceaux vers un deuxième jeu de miroirs symétriques **20** positionnés pour illuminer et observer l'emballage **3** de manière symétrique par rapport à la normale à l'emballage. Une lentille **22** est positionnée sur le trajet de chaque chemin optique des faisceaux, entre les miroirs **20** du second jeu et l'emballage **3.**

Bien entendu, les faisceaux lumineux qui illuminent l'emballage présentent toutes les caractéristiques du faisceau lumineux **10** décrites ci-avant. Ainsi, chaque faisceau lumineux s'étend transversalement à la direction de balayage **X** et produit sur l'emballage **3** selon la direction de balayage **X** au moins une transition lumineuse **t** s'étendant sur la largeur de champ **L.** Par ailleurs, les sources lumineuses **9**, **9₁** sont pilotées en éclairage-extinction par une unité de commande pilotant soit le fonctionnement simultané des deux sources, soit le fonctionnement alterné des deux sources sur la demi-longueur de l'emballage considéré selon la direction de balayage. La caméra **13** assure la reconstruction de deux images correspondant à l'observation selon des chemins optiques différents de l'emballage, selon au moins ses demi-longueurs.

Il est à noter que dans le mode de fonctionnement simultané des deux sources lumineuses, la caméra **13** peut reconstruire deux images complètes de l'emballage observé sous les deux angles d'observation symétriques. L'unité de traitement d'images exploite alors uniquement la partie de chaque image observée non masquée. Dans le mode de fonctionnement alterné des sources lumineuses, la caméra reconstruit pendant chaque éclairage, une image correspondant à la moitié de l'emballage observé non masquée. L'unité de traitement **15** assure le traitement des images selon le procédé décrit ci-dessus.

L'invention n'est pas limitée aux exemples décrits et représentés car diverses modifications peuvent y être apportées sans sortir de son cadre.

## Revendications

1. Procédé pour inspecter des soudures **(2)** d'emballages **(3),** lesdites soudures se présentant sous forme d'un ruban délimité par deux bords opposés (**d, e)** de part et d'autre d'une courbe directrice (**C**), consistant :
- à balayer les soudures **(2)** selon une direction de balayage (**X**) au moyen d'un faisceau lumineux **(10)** fourni par une source lumineuse **(9)** illuminant les emballages, ledit faisceau s'étendant selon une direction (Y) transversalement à la direction de balayage (**X**) de manière à couvrir une largeur de champ (**L**) ;
- à acquérir à chacun des N incréments successifs de balayage, une image brute matricielle (**B(N)**) des emballages illuminés à l'aide d'une caméra **(13)** munie d'un objectif et dont le champ rectangulaire est de dimensions **LxH,** avec **H** s'étendant selon la direction de balayage **(X)** et **L** correspondant à une largeur de contrôle (**L**) selon la direction **(Y)** orthogonale à la direction de balayage **(X),** et à analyser les images fournies par la caméra ;
**caractérisé en ce que** :
- on crée un faisceau lumineux **(10)** produisant sur l'emballage, selon la direction dé balayage (**X**), au moins une transition lumineuse (**t**) s'étendant sur la largeur de champ **(L)** ;
- on acquiert une image brute matricielle **(B(N))** englobant la transition lumineuse **(t)** ;
- de chaque image brute matricielle (**B(N)**) obtenue, on extrait sur toute la largeur de champ (**L**) et on mémorise, une mesure de la diffusion par l'emballage de la transition lumineuse **(t)** ;
- pour chacun des N incréments successifs de balayage, on crée à partir de l'image brute matricielle **(B(N)**), une ligne d'image (**I(N)**) de largeur **(L)** dont chaque pixel reçoit comme valeur, la mesure dans limage brute matricielle **(B(N))** de la diffusion d'au moins la transition lumineuse **(t)** ;
- on enregistre à la suite au moins N lignes d'images (**I(N)**) afin d'obtenir par juxtaposition, une image matricielle **(I)** contenant au moins les deux bords opposés **(d, e)** de la soudure pour au moins une portion de la courbe directrice **(C)** ;
- et on analyse l'image matricielle (**I**) :
∘ en identifiant les pixels appartenant à la soudure grâce à leur valeur ;
∘ en déterminant, en tout point le long de la portion de la courbe directrice (**C**), comme caractéristique de la soudure, au moins la largeur transversale (**a**) **;**
∘ en déterminant la conformité de la soudure sur ladite portion lorsque sa largeur transversale (**a**) reste en tout point supérieure à un minimum donné.

2. Procédé selon la revendication 1, **caractérisé en ce que** lors d'une étape de segmentation :
- on présélectionne les pixels de valeurs de diffusion dans un intervalle déterminé comme appartenant potentiellement à la soudure ;
- au voisinage de la courbe directrice (**C**), on choisit parmi les pixels présélectionnés, un ensemble de pixels connexes pour constituer ensemble la soudure.

3. Procédé selon la revendication 1, **caractérisé en ce qu'**il consiste à mesurer la diffusion de la transition dans l'image brute matricielle **(B(N))** en prenant en compte l'étalement de la transition qui est caractérisé, soit par la baisse de gradient de lumière au voisinage de la transition, soit par le déplacement d'un point de franchissement d'un seuil de lumière défini, soit en mesurant le niveau de gris des pixels considérés le long de lignes sélectionnées situées en dehors de la zone éclairée, mais au voisinage de la transition lumineuse.

4. Procédé selon la revendication 1 à 3, **caractérisé en ce que** l'on projette comme faisceau lumineux, une bande lumineuse produisant deux transitions lumineuses dans le champ **(LxH)** de la caméra, et la mesure de diffusion est obtenue par l'analyse des deux transitions.

5. Procédé selon les revendications 1 à 3, **caractérisé en ce que** l'on projette comme faisceau lumineux, une raie lumineuse étroite dont la section transversale correspond à un pic de lumière.

6. Procédé selon la revendication 5, **caractérisé en ce que** la mesure de diffusion est obtenue par l'étalement du pic de lumière déterminé soit par la largeur entre les deux points de franchissement d'un seuil de lumière défini, soit par la baisse de hauteur du pic, soit par la mesure des niveaux gris des pixels considérés le long de lignes sélectionnées situées de part et d'autre de la zone éclairée, en dehors mais au voisinage de la transition lumineuse, soit par la baisse de gradient de lumière au voisinage de la transition.

7. Procédé selon la revendication 1, **caractérisé en ce qu'**il, consiste à analyser l'image **(I)** uniquement pour une zone d'inspection de surface largement inférieure à l'image (**I**) mais englobant au moins la soudure considérée comme correcte, ladite zone d'inspection étant une région géométriquement définie au préalable, et positionnée dans l'image (**I**), soit en fonction de la connaissance à priori de la position des emballages lors du contrôle, soit en fonction des résultats d'une étape de localisation de la soudure par analyse de l'image **(I).**

8. Procédé selon la revendication 1, **caractérisé en ce qu'**il consiste à analyser l'image **(I)** dès qu'est obtenue par balayage, une image (**I**). contenant au moins les deux bords opposés **(d, e)** de la soudure pour au moins une portion de la courbe directrice (**C**).

9. Procédé selon la revendication 1, **caractérisé en ce qu'**il consiste à choisir l'angle d'incidence (**α**) de projection du faisceau lumineux **(10)** et d'observation (**β**) de la caméra **(13)** défini comme l'angle entre son axe optique et la normale à la surface de l'emballage, de manière à ne pas acquérir la lumière réfléchie de manière spéculaire par l'emballage.

10. Procédé selon la revendication 1, **caractérisé en ce qu'**il consiste à choisir l'angle d'incidence (**α**) de projection du faisceau lumineux **(10)** et d'observation (**β**) de la caméra **(13)** défini comme l'angle entre son axe optique et la normale à la surface de l'emballage, de manière à limiter ou supprimer l'occultation de la soudure par les bords des alvéoles des emballages.

11. Dispositif pour inspecter des soudures **(2)** d'emballages (**3**), lesdites soudures se présentant sous forme d'un ruban délimité par deux bords opposés **(d, e)** de part et d'autre d'une courbe directrice **(C),** comprenant :
- au moins une source lumineuse **(9)** illuminant les emballages par un faisceau lumineux **(10),** étendu selon une direction **(Y)** de manière à couvrir une largeur de champ **(L)** ;
- une caméra **(13)** munie d'un objectif et dont le champ rectangulaire **(LxH)** est une largeur de contrôle **(L)** selon la direction **(Y)** et au moins de dimension **H** selon une direction de balayage **(X)** orthogonale à la direction **(Y),** fournissant une image brute matricielle (**B(N)**) des emballages illuminés ;
- des moyens de balayage des soudures **(2)** par le faisceau lumineux **(10)** et le champ rectangulaire **(LxH)** de la caméra **(13)** selon la direction de balayage **(X),** transversale à la direction **(Y)** ;
- une unité de traitement **(15)** des images brutes matricielles **(B(N))** successives délivrées par la caméra **(13)** au cours d'au moins N incréments de balayages ;
**caractérisé en ce que** :
- le faisceau lumineux **(10)** produit sur remballage, selon la direction de balayage **(X),** au moins une transition lumineuse **(t)** s'étendant sur la largeur de champ **(L)** ;
et **en ce que** l'unité de traitement, pour chacun des N incréments successifs de balayage :
- acquiert une image brute matricielle **(B(N))** englobant la ou les transitions lumineuses **(t)** ;
- extrait de chaque image brute matricielle **(B(N)),** sur toute la largeur de champ **(L),** et ensuite mémorise, une mesure de la diffusion par l'emballage de la transition lumineuse ;
- pour chacun des N incréments successifs de balayage, crée à partir de l'image brute matricielle **(B(N)),** une ligne d'image **(I(N))** de largeur **(L)** dont chaque pixel reçoit comme valeur, la mesure dans l'image brute matricielle **(B(N))** de la diffusion de la ou les transition lumineuse ;
- enregistre à la suite au moins N lignes d'images **(I(N))** afin d'obtenir par juxtaposition, une image matricielle **(I)** contenant au moins les deux bords opposés **(d, e)** de la soudure pour au moins une portion de la courbe directrice **(C)** ;
- identifie dans l'image matricielle **(I)** les pixels appartenant à la soudure grâce à leur valeur ;
- détermine, en tout point le long de la portion de la courbe directrice **(C),** comme caractéristique de la soudure, au moins la largeur transversale **(a)** ;
- détermine la conformité de la soudure sur ladite portion lorsque sa largeur transversale (**a**) reste en tout point supérieure à un minimum donné.

12. Dispositif selon la revendication 11, **caractérisé en ce qu'**il comprend un système optique **(18)** interposé entre les emballages **(3)** et la caméra **(13)** et deux sources lumineuses **(9**, **9₁)** de manière que d'une part les angles d'incidence de projection des faisceaux lumineux issus des deux sources et d'autre part les angles d'observation de la caméra soient symétriques par rapport à la normale à l'emballage.

13. Dispositif selon la revendication 12, **caractérisé en ce que** les sources lumineuses **(9, 9₁)** sont pilotées en éclairage-extinction par une unité de commande pilotant soit le fonctionnement simultané des deux sources, soit le fonctionnement alterné des deux sources pendant la demi-longueur de l'emballage considéré selon la direction de balayage **(X),** la caméra **(13)** assurant la reconstruction de deux images correspondant à l'observation selon des chemins optiques différents de l'emballage, selon au moins ses demi-longueurs.

14. Dispositif selon l'une des revendications 11 à 13, **caractérisé en ce que** chaque faisceau lumineux **(10)** produit sur l'emballage une bande lumineuse présentant dans le champ de la caméra, deux transitions lumineuses **(t)** s'étendant sur toute la largeur de champ **(L).**

15. Dispositif selon l'une des revendications 11 à 13, **caractérisé en ce que** chaque faisceau lumineux **(10)** produit sur l'emballage une raie lumineuse étroite s'étendant sur toute la largeur de champ **(L)** et présentant dans la direction de balayage **(X),** un pic compris entre deux transitions lumineuses proches.

16. Dispositif selon la revendication 11, **caractérisé en ce que** le système de balayage **(16)** des soudures **(2)** par le faisceau lumineux **(10)** et le champ rectangulaire **(LxH)** de la caméra **(13)** sont des moyens de déplacement des emballages en translation continu dans le champ de la caméra **(13)** ou avançant par saccades.

17. Dispositif selon la revendication 11, **caractérisé en ce que** le système de balayage des soudures **(2)** par le faisceau lumineux **(10)** et le champ rectangulaire **(LxH)** de la caméra **(13)** sont des moyens de déplacement des dispositifs optiques par rapport aux emballages fixes ou avançant par saccades.

18. Dispositif selon la revendication 11, **caractérisé en ce que** le système de balayage des soudures **(2)** par le faisceau lumineux **(10)** et le champ rectangulaire **(LxH)** de la caméra **(13)** comprennent des dispositifs optiques de déflexion des rayons lumineux issus de la source et des rayons lumineux captés par la caméra, lesdits dispositifs optiques étant interposés entre les emballages d'une part et la source de lumière et la caméra d'autre part.

19. Dispositif selon la revendication 11, **caractérisé en ce que** le système de balayage délivre à l'unité de traitement des informations de positionnement des emballages par rapport au champ de la caméra.

20. Dispositif selon l'une des revendications 11 à 13, **caractérisé en ce que** l'angle d'incidence (**α**) de projection de chaque faisceau lumineux **(10)** et d'observation (**β**) de la caméra **(13)** défini comme l'angle entre son axe optique et la normale à la surface de l'emballage, sont choisis de manière à ne pas acquérir la lumière réfléchie ou transmise de manière spéculaire par l'emballage.

21. Dispositif selon l'une des revendications 11 à 13, **caractérisé en ce que** les sources lumineuses **(9)** et la caméra **(13)** étant situées du même côté de l'emballage, l'angle d'incidence (**α**) de projection du ou des faisceaux lumineux et d'observation **(β)** de la caméra défini comme l'angle entre son axe optique et la normale à la surface de l'emballage, sont choisis entre 10° et 30° et de préférence entre 20° et 25°.

22. Dispositif selon la revendication 11, **caractérisé en ce que** l'angle d'incidence (**α**) de projection du faisceau lumineux est choisi entre 5° et 30° et de préférence entre 15° et 20° tandis que l'angle d'incidence **(β)** d'observation de la caméra défini comme l'angle entre son axe optique et la normale à la surface de l'emballage est compris entre 0 et 5° et de préférence égal à 0°, la source et la caméra étant située de manière opposée par rapport à l'emballage.

## Patentansprüche

1. Verfahren zur Prüfung von Schweißnähten (2) von Verpackungen (3), wobei die Schweißnähte in Form eines Streifens, welcher durch zwei gegenüberliegende Ränder (d, e) auf beiden Seiten einer Leitkurve (C) begrenzt ist, vorliegen, darin bestehend:
- die Schweißnähte (2) in einer Abtastrichtung (X) mittels eines Lichtstrahls (10), welcher durch eine die Verpackungen beleuchtende Lichtquelle (9) geliefert wird, abzutasten, wobei der Strahl sich in einer Richtung (Y) quer zu der Abtastrichtung (X) erstreckt, um eine Feldbreite (L) abzudecken,
- bei jedem der aufeinanderfolgenden N Abtastschritte ein Matrixrohbild (B(N)) der beleuchteten Verpackungen mit Hilfe einer Kamera (13) aufzunehmen, die mit einem Objektiv ausgestattet ist und deren rechteckiges Feld die Abmessungen LxH aufweist, wobei H sich in der Abtastrichtung (X) erstreckt und L einer Prüfbreite (L) in der zu der Abtastrichtung (X) orthogonalen Richtung (Y) entspricht, und die durch die Kamera gelieferten Bilder zu analysieren,
**dadurch gekennzeichnet, dass**:
- ein Lichtstrahl (10) erstellt wird, der auf der Verpackung in der Abtastrichtung (X) wenigstens einen sich über die Feldbreite (L) erstreckenden Lichtübergang (t) erzeugt,
- ein Matrixrohbild (B(N)), welches den Lichtübergang (t) einschließt, aufgenommen wird,
- aus jedem erhaltenen Matrixrohbild (B(N)) über die gesamte Feldbreite (L) ein Maß der Diffusion des Lichtübergangs (t) durch die Verpackung extrahiert und gespeichert wird,
- für einen jeden der aufeinanderfolgenden N Abtastschritte aus dem Matrixrohbild (B(N)) eine Bildzeile (I(N)) mit der Breite (L) erstellt wird, von der jedes Pixel das Maß der Diffusion wenigstens des Lichtübergangs (t) in dem Matrixrohbild (B(N)) als Wert erhält,
- in der Folge wenigstens N Bildzeilen (I(N)) aufgezeichnet werden, um durch Aneinanderreihung ein Matrixbild (I) zu erhalten, das wenigstens die beiden gegenüberliegenden Ränder (d, e) der Schweißnaht für wenigstens einen Abschnitt der Leitkurve (C) enthält, und
- das Matrixbild (I) analysiert wird:
∘ indem die zu der Schweißnaht gehörenden Pixel dank ihres Wertes erkannt werden,
∘ indem an jeder Stelle entlang des Abschnittes der Leitkurve (C) als Merkmal der Schweißnaht wenigstens die Querbreite (a) bestimmt wird,
∘ indem die Korrektheit der Schweißnaht über den Abschnitt bestimmt wird, wenn ihre Querbreite (a) an jeder Stelle größer als ein gegebenes Minimum bleibt.

2. Verfahren nach Anspruch 1, **dadurch gekennzeichnet, dass** bei einem Segmentierungsschritt:
- die Pixel mit Diffusionswerten in einem bestimmten Intervall als potentiell zur Schweißnaht gehörend vorausgewählt werden,
- in der Nähe der Leitkurve (C) aus den vorausgewählten Pixeln eine Menge von zusammenhängenden Pixeln ausgewählt wird, um zusammen die Schweißnaht zu bilden.

3. Verfahren nach Anspruch 1, **dadurch gekennzeichnet, dass** es darin besteht, die Diffusion des Übergangs in dem Matrixrohbild (B(N)) unter Berücksichtigung der Ausbreitung des Übergangs zu messen, die entweder durch den Abfall des Lichtgradienten in der Nähe des Übergangs oder durch die Bewegung einer Stelle des Überschreitens einer definierten Lichtschwelle oder durch Messen des Grauwertes der betrachteten Pixel entlang von ausgewählten Linien, die außerhalb des beleuchteten Bereichs, aber in der Nähe des Lichtübergangs liegen, gekennzeichnet ist.

4. Verfahren nach Anspruch 1 bis 3, **dadurch gekennzeichnet, dass** als Lichtstrahl ein Lichtband projiziert wird, das zwei Lichtübergänge in dem Feld (LxH) der Kamera erzeugt, und das Diffusionsmaß durch Analyse der beiden Übergänge erhalten wird.

5. Verfahren nach den Ansprüchen 1 bis 3, **dadurch gekennzeichnet, dass** als Lichtstrahl ein schmaler Lichtstreifen projiziert wird, dessen Querschnitt einem Lichtpeak entspricht.

6. Verfahren nach Anspruch 5, **dadurch gekennzeichnet, dass** das Diffusionsmaß durch Ausbreitung des Lichtpeaks erhalten wird, die entweder durch die Breite zwischen den beiden Stellen des Überschreitens einer definierten Lichtschwelle oder durch die Höhenabnahme des Peaks oder durch die Messung der Grauwerte der betrachteten Pixel entlang von ausgewählten Linien, die auf beiden Seiten des beleuchteten Bereichs, außerhalb, aber in der Nähe des Lichtübergangs liegen, oder durch den Abfall des Lichtgradienten in der Nähe des Übergangs bestimmt ist.

7. Verfahren nach Anspruch 1, **dadurch gekennzeichnet, dass** es darin besteht, das Bild (I) lediglich für einen Prüfbereich mit weitaus kleinerer Fläche als das Bild (I), der jedoch wenigstens die als fehlerfrei betrachtete Schweißnaht einschließt, zu analysieren, wobei der Prüfbereich ein Bereich ist, der zuvor geometrisch definiert wird, und in dem Bild (I) gelegen ist, entweder in Abhängigkeit von der vorherigen Kenntnis der Position der Verpackungen während der Prüfung oder in Abhängigkeit von den Ergebnissen eines Schrittes zur Lokalisierung der Schweißnaht durch Analyse des Bildes (I).

8. Verfahren nach Anspruch 1, **dadurch gekennzeichnet, dass** es darin besteht, das Bild (I) zu analysieren, sobald es durch Abtasten erhalten wird, wobei ein Bild (I) wenigstens die beiden gegenüberliegenden Ränder (d, e) der Schweißnaht für wenigstens einen Abschnitt der Leitkurve (C) enthält.

9. Verfahren nach Anspruch 1, **dadurch gekennzeichnet, dass** es darin besteht, den Einfallwinkel (α) der Projektion des Lichtstrahls (10) und Betrachtungswinkel (β) der Kamera (13), welcher als der Winkel zwischen ihrer optischen Achse und der Normalen zur Oberfläche der Verpackung definiert ist, derart zu wählen, dass nicht das durch die Verpackung spiegelnd reflektierte Licht erfasst wird.

10. Verfahren nach Anspruch 1, **dadurch gekennzeichnet, dass** es darin besteht, den Einfallwinkel (α) der Projektion des Lichtstrahls (10) und Betrachtungswinkel (β) der Kamera (13), welcher als der Winkel zwischen ihrer optischen Achse und der Normalen zur Oberfläche der Verpackung definiert ist, derart zu wählen, dass die Abdeckung der Schweißnaht durch die Ränder der Zellen der Verpackungen begrenzt oder aufgehoben wird.

11. Vorrichtung zur Prüfung von Schweißnähten (2) von Verpackungen (3), wobei die Schweißnähte in Form eines Streifens, welcher durch zwei gegenüberliegende Ränder (d, e) auf beiden Seiten einer Leitkurve (C) begrenzt ist, vorliegen, umfassend:
- wenigstens eine Lichtquelle (9), die die Verpackungen mittels eines Lichtstrahls (10) beleuchtet, der in einer Richtung (Y) erstreckt ist, um eine Feldbreite (L) abzudecken,
- eine Kamera (13), die mit einem Objektiv ausgestattet ist und deren rechteckiges Feld (LxH) eine Prüfbreite (L) in der Richtung (Y) ist und wenigstens die Abmessung H in einer zu der Richtung (Y) orthogonalen Abtastrichtung (X) aufweist, die ein Matrixrohbild (B(N)) der beleuchteten Verpackungen liefert,
- Mittel zum Abtasten der Schweißnähte (2) durch den Lichtstrahl (10) und das rechteckige Feld (LxH) der Kamera (13) in der zu der Richtung (Y) orthogonalen Abtastrichtung (X),
- eine Einheit zur Verarbeitung (15) der aufeinanderfolgenden Matrixrohbilder (B(N)), die durch Kamera (13) im Laufe von wenigstens N Abtastschritten geliefert werden,
**dadurch gekennzeichnet, dass**:
- der Lichtstrahl (10) auf der Verpackung in der Abtastrichtung (X) wenigstens einen sich über die Feldbreite (L) erstreckenden Lichtübergang (t) erzeugt, und dass die Verarbeitungseinheit für jeden der aufeinanderfolgenden N Abtastschritte:
- ein Matrixrohbild (B(N)), welches den oder die Lichtübergänge (t) einschließt, erfasst,
- aus jedem Matrixrohbild (B(N)) über die gesamte Feldbreite (L) ein Maß der Diffusion des Lichtübergangs durch die Verpackung extrahiert und speichert,
- für einen jeden der aufeinanderfolgenden N Abtastschritte aus dem Matrixrohbild (B(N)) eine Bildzeile (I(N)) mit der Breite (L) erstellt, von der jedes Pixel das Maß der Diffusion des oder der Lichtübergänge in dem Matrixrohbild (B(N)) als Wert erhält,
- in der Folge wenigstens N Bildzeilen (I(N)) aufzeichnet, um durch Aneinanderreihung ein Matrixbild (I) zu erhalten, das wenigstens die beiden gegenüberliegenden Ränder (d, e) der Schweißnaht für wenigstens einen Abschnitt der Leitkurve (C) enthält,
- in dem Matrixbild (I) die zu der Schweißnaht gehörenden Pixel dank ihres Wertes erkennt,
- an jeder Stelle entlang des Abschnittes der Leitkurve (C) als Merkmal der Schweißnaht wenigstens die Querbreite (a) bestimmt,
- die Korrektheit der Schweißnaht über den Abschnitt bestimmt, wenn ihre Querbreite (a) an jeder Stelle größer als ein gegebenes Minimum bleibt.

12. Vorrichtung nach Anspruch 11, **dadurch gekennzeichnet, dass** sie ein optisches System (18) umfasst, das zwischen den Verpackungen (3) und der Kamera (13) und zwei Lichtquellen (9, 9₁) eingefügt ist, so dass einerseits die Projektionseinfallwinkel der aus den beiden Quellen stammenden Lichtstrahlen und andererseits die Betrachtungswinkel der Kamera in Bezug auf die Normale zur Verpackung symmetrisch sind.

13. Vorrichtung nach Anspruch 12, **dadurch gekennzeichnet, dass** die Lichtquellen (9, 9₁) durch eine Steuerungseinheit, welche entweder den gleichzeitigen Betrieb der beiden Quellen oder den abwechselnden Betrieb der beiden Quellen während der halben Länge der betrachteten Verpackung in der Abtastrichtung (X) steuert, beleuchtungs-/abschaltungsgesteuert werden, wobei die Kamera (13) die Rekonstruktion von zwei Bildern, die der Betrachtung entlang unterschiedlicher Lichtwege der Verpackung, entlang wenigstens ihrer halben Längen entsprechen, sicherstellt.

14. Vorrichtung nach einem der Ansprüche 11 bis 13, **dadurch gekennzeichnet, dass** jeder Lichtstrahl (10) auf der Verpackung ein Lichtband erzeugt, das in dem Feld der Kamera zwei Lichtübergänge (t), welche sich über die gesamte Feldbreite (L) erstrecken, aufweist.

15. Vorrichtung nach einem der Ansprüche 11 bis 13, **dadurch gekennzeichnet, dass** jeder Lichtstrahl (10) auf der Verpackung einen schmalen Lichtstreifen erzeugt, der sich über die gesamte Feldbreite (L) erstreckt und der in der Abtastrichtung (X) ein Peak zwischen zwei nahen Lichtübergängen aufweist.

16. Vorrichtung nach Anspruch 11, **dadurch gekennzeichnet, dass** das System zum Abtasten (16) der Schweißnähte (2) mittels des Lichtstrahls (10) und des rechteckigen Feldes (LxH) der Kamera (13) Mittel zum kontinuierlichen Verschiebebewegen der Verpackungen, oder ruckweise vorrückend, in dem Feld der Kamera (13) sind.

17. Vorrichtung nach Anspruch 11, **dadurch gekennzeichnet, dass** das System zum Abtasten der Schweißnähte (2) mittels des Lichtstrahls (10) und des rechteckigen Feldes (LxH) der Kamera (13) Mittel zum Bewegen der optischen Vorrichtungen gegenüber den festen oder ruckweise vorrückenden Verpackungen sind.

18. Vorrichtung nach Anspruch 11, **dadurch gekennzeichnet, dass** das System zum Abtasten der Schweißnähte (2) mittels des Lichtstrahls (10) und des rechteckigen Feldes (LxH) der Kamera (13) optische Vorrichtungen zum Ablenken der aus der Quelle stammenden Lichtstrahlen und der durch die Kamera erfassten Lichtstrahlen umfassen, wobei die optischen Vorrichtungen zwischen den Verpackungen einerseits und der Lichtquelle und der Kamera andererseits eingefügt sind.

19. Vorrichtung nach Anspruch 11, **dadurch gekennzeichnet, dass** das Abtastsystem der Verarbeitungseinheit Informationen zur Positionierung der Verpackungen in Bezug auf das Feld der Kamera liefert.

20. Vorrichtung nach einem der Ansprüche 11 bis 13, **dadurch gekennzeichnet, dass** der Einfallwinkel (α) der Projektion eines jeden Lichtstrahls (10) und Betrachtungswinkel (β) der Kamera (13), welcher als der Winkel zwischen ihrer optischen Achse und der Normalen zur Oberfläche der Verpackung definiert ist, derart gewählt sind, dass nicht das durch die Verpackung spiegelnd reflektierte oder durchgelassene Licht aufgenommen wird.

21. Vorrichtung nach einem der Ansprüche 11 bis 13, **dadurch gekennzeichnet, dass**, da die Lichtquellen (9) und die Kamera (13) auf der gleichen Seite der Verpackung gelegen sind, der Einfallwinkel (α) der Projektion des oder der Lichtstrahlen (10) und Betrachtungswinkel (β) der Kamera, welcher als der Winkel zwischen ihrer optischen Achse und der Normalen zur Oberfläche der Verpackung definiert ist, zwischen 10° und 30° und vorzugsweise zwischen 20° und 25° gewählt sind.

22. Vorrichtung nach Anspruch 11, **dadurch gekennzeichnet, dass** der Einfallwinkel (α) der Projektion des Lichtstrahls zwischen 5° und 30° und vorzugsweise zwischen 15° und 20° gewählt ist, während der Einfallwinkel (β) der Betrachtung der Kamera, welcher als der Winkel zwischen ihrer optischen Achse und der Normalen zur Oberfläche der Verpackung definiert ist, zwischen 0° und 5° und vorzugsweise gleich 0° gewählt ist, wobei die Quelle und die Kamera in Bezug auf die Verpackung gegenüberliegend angeordnet sind.

## Claims

1. A method of inspecting welds (2) of packages (3), said welds being in the form of respective strips defined by two opposite edges (d, e) on either side of a guide curve (C), the method consisting in:
• scanning the welds (2) in a scanning direction (X) by means of a light beam (10) supplied by a light source (9) illuminating the packages, said beam extending according to a direction (Y) transversely to the scanning direction (X) in such a manner as to cover a field width (L);
• acquiring at each of N successive scanning increments a raw matrix image (B(N)) of the illuminated packages by using a camera (13) having a lens and having a rectangular field at least of dimension (LxH) with H extending in the scanning direction (X) and L corresponding to an inspection width (L) in the direction (Y) transversal to the scanning direction (X); and
• analyzing the images supplied by the camera;
**characterized by**:
• creating a light beam that produces at least one light transition (t) in the scanning direction (X) on the package, the transition extending over the field width (L);
• acquiring a raw matrix image (B(N)) covering the light transition;
• for each raw matrix image (B(N)) obtained, extracting over the entire field width (L) a measurement of the diffusion of the light transition as imparted by the package, and storing these measurements;
• for each of N successive scanning increments, using the raw matrix image (B(N)) to create an image line (I(N)) of width (L) in which each pixel receives as its value the measurement in the raw matrix image (B(N)) of the diffusion of at least the light transition (t);
• storing at least N image lines (I(N)) in succession to obtain by juxtaposition a matrix image (I), the image containing at least the two opposite edges (d, e) of the weld for at least a fraction of the guide curve (C), and storing the image; and
• analyzing the matrix image (I):
∘ by identifying the pixels belonging to the weld by means of their values;
∘ by determining at least the transverse width (a) as a characteristic of the weld at all points along the fraction of the guide curve (C); and
∘ by determining that the weld along said fraction is in conformity when its transverse width (a) remains, at all points, greater than a given minimum.

2. A method according to claim 1, **characterized in that** during a segmentation step:
• pixels having diffusion values lying in a determined range are preselected as potentially belonging to the weld; and
• in the vicinity of the guide curve (C), a set of connected pixels is selected from the preselected pixels so that together they constitute the weld.

3. A method according to claim 1, **characterized in that** it consists in measuring the diffusion of the transition in the raw matrix image (B(N)) by taking account of the spread of the transition, which spread is characterized either by a drop in the light gradient in the vicinity of the transition, or by a shift of a point at which a defined light threshold is crossed, or by measuring the gray levels of pixels along selected lines situated outside the illuminated zone, but in the vicinity of the light transition.

4. A method according to claim 1 to 3, **characterized in that** a strip of light is projected as the light beam, which strip of light produces two light transitions in the field (L-H) of the camera, and diffusion is measured by analyzing the two transitions.

5. A method according to claims 1 to 3, **characterized in that** a narrow strip of light is projected as the light beam, which strip of light is of cross-section that corresponds to a light peak.

6. A method according to claim 5, **characterized in that** diffusion is measured by the spreading of the determined light peak, either by the width between two points crossing a defined light threshold, or by the drop in the height of the peak, or by measuring the gray levels of pixels considered along selected lines situated on either side of the illuminated zone, outside but close to the light transition, or by the drop in the light gradient in the vicinity of the transition.

7. A method according to claim 1, **characterized in that** it consists in analyzing the image (I) solely for an inspection zone of area that is much smaller than the area of the image (I) but covering at least the weld that is considered as being correct, said inspection zone being a region that is geometrically defined beforehand and that is positioned in the image (I) either as a function of a priori knowledge of the positions of packages during inspection, or as a function of the results of a step of locating the weld by analyzing the image (I).

8. A method according to claim 1, **characterized in that** it consists in analyzing the image (I) as soon as scanning obtains an image (I) containing at least the two opposite edges (d, e) of the weld for at least a fraction of the guide curve (C).

9. A method according to claim 1, **characterized in that** it consists in selecting the angle of incidence (α) with which the light beam (10) is projected and the angle of observation (β) of the camera (13) defined as the angle between its optical axis and the normal to the surface of the package in such a manner as to avoid acquiring light that is reflected in specular manner by the package.

10. A method according to claim 1, **characterized in that** it consists in selecting the angle of incidence (α) with which the light beam (10) is projected and the angle of observation (β) of the camera (13) defined as the angle between its optical axis and the normal to the surface of the package in such a manner as to limit or eliminate masking of the weld by the edges of the receptacles of the packages.

11. A device for inspecting welds (2) of packages (3), said welds being in the form of respective strips defined by two opposite edges (d, e) on either side of a guide curve (C), the device comprising:
• at least one light source (9) illuminating the packages with a light beam (10) extending in a direction (Y) in such a manner as to cover a field width (L);
• a camera (13) provided with a lens and having a rectangular field (LxH) at least of an inspection width (L) in the direction (Y) and at least of dimension H along a scanning direction (X) orthogonal to the direction (Y) suitable for providing a raw matrix image (B(N)) of the illuminated packages;
• means for scanning the welds (2) by the light beam (10) and the rectangular field (LxH) of the camera (13) in the scanning direction (X) transverse to the direction (Y); and
• processor unit (15) for processing the successive raw matrix images (B(N)) delivered by the camera (13) during at least N scanning increments;
**characterized in that**:
• the light beam (10) produces at least one light transition (t) in the scanning direction (X) of the package, the light transition extending over the field width (L);
and **in that**, for each of the N successive scanning increments, the processor unit:
• acquires a raw matrix image (B(N)) covering the light transition(s);
• extracts from each raw matrix image (B(N)) over the entire field width (L) a measurement of the diffusion by the package of the light transition, and then stores the measurement;
• for each of the N successive scanning increments, uses the raw matrix image (B(N)) to create an image line (I(N)) of width (L) in which each pixel receives as its value the measurement in the raw matrix image (B(N)) of the diffusion of the light transition(s);
• stores at least N image lines (I(N)) in succession to obtain by juxtaposition a matrix image (I) containing at least the two opposite edges (d, e) of the weld for at least a fraction of the guide curve (C), and stores it;
• identifies in the matrix image (I) the pixels belonging to the weld by means of their values;
• determines at least its transverse width (a) as a characteristic of the weld at all points along the guide curve (C); and
• determines that the weld is in compliance over said portion when its transverse width (a) remains at all points greater than a given minimum.

12. A device according to claim 11, **characterized in that** it includes an optical system (18) interposed between the packages (3) on one side and the camera (13) and two light sources (9, 91) on the other side in such a manner as to ensure firstly that the angles of incidence with which the light beams are projected from the two sources and secondly the angles of observation of the camera are symmetrical about the normal to the package.

13. A device according to claim 12, **characterized in that** the light sources (9, 91) are subjected to on/off control by a control unit that either causes the two sources to operate simultaneously, or else causes the two sources to operate in alternation over the half-length of the package considered in the scanning direction (X), the camera (13) serving to reconstruct two images corresponding to observation of the package along different light paths, at least in its half-lengths.

14. A device according to any one of claims 11 to 13, **characterized in that** each light beam (10) produces a strip of light on the package that presents, in the field of the camera, two light transitions (t) extending over the entire field width (L).

15. A device according to any one of claims 11 to 13, **characterized in that** each light beam (10) produces a narrow line of light extending on the package over the entire field width (L) and presenting a peak in the scanning direction (X) that lies between two close-together light transitions.

16. A device according to claim 11, **characterized in that** the system (16) for scanning the welds (2) by the light beam (10) and by the rectangular field (LxH) of the camera (13) comprises means for moving the packages in continuous translation through the field of the camera (13), or for advancing them in jerks.

17. A device according to claim 11, **characterized in that** the system for scanning the welds (2) by the light beam (10) and by the rectangular field (LxH) of the camera (13) comprises means for moving optical devices relative to the packages, which are stationary or advance in jerks.

18. A device according to claim 11, **characterized in that** the system for scanning the welds (2) by the light beam (10) and by the rectangular field (LxH) of the camera (13) comprise optical devices for deflecting light rays from the source and light rays picked up by the camera, said optical devices being interposed between the packages on one side and the light source of the camera on the other.

19. A device according to claim 11, **characterized in that** the scanning system delivers information to the processor unit about the positions of the packages relative to the field of the camera.

20. A device according to any one of claims 11 to 13, **characterized in that** the angle of incidence (α) with which each light beam (10) is projected and the angle of observation (β) of the camera (13) defined as the angle between its optical axis and the normal to the surface of the package are selected in such a manner as to avoid acquiring light that has been reflected or transmitted in specular manner by the package.

21. A device according to any one of claims 11 to 13, **characterized in that** the light sources (9) and the camera (13) are situated on the same side of the package, the angle of incidence (α) with which the light beam(s) is/are projected and the angle of observation (β) of the camera defined as being the angle between its optical axis and the normal to the surface of the package are selected to lie in the range 10° to 30°, and preferably in the range 20° to 25°.

22. A device according to claim 11, **characterized in that** the angle of incidence (α) with which the light beam is projected is selected to lie in the range 5° to 30° and preferably in the range 15° to 20°, while the angle of incidence (β) of observation by the camera defined as the angle between its optical axis and the normal to the surface of the package lies in the range 0° to 5° and is preferably equal to 0°, the source and the camera being situated in opposite manner relative to the package.
